# FASCICULE DE BREVET EUROPEEN

(11) **EP 3 078 230 B1**
(45) Date de publication et mention de la délivrance du brevet: **26.06.2019**
(21) Numéro de dépôt: 14805855.5
(22) Date de dépôt: 27.11.2014
(51) Int. Cl.: H04W 52/02, H04W 76/28, H04W 84/12, H04W 88/10

(54) **DISPOSITIF ET PROCÉDÉ DE CONFIGURATION D'UN DISPOSITIF DE COMMUNICATION**
VORRICHTUNG UND VERFAHREN ZUM KONFIGURIEREN EINER KOMMUNIKATIONSVORRICHTUNG
DEVICE AND METHOD FOR CONFIGURING A COMMUNICATION DEVICE

(30) Priorité: 06.12.2013 FR 1362232
(43) Date de publication de la demande: 12.10.2016
(73) Titulaire: Sagemcom Broadband SAS, 92500 Rueil-Malmaison (FR)
(72) Inventeur: DANGY-CAYE, Nicolas, F-92500 Rueil Malmaison (FR)
(74) Mandataire: Cabinet Le Guen Maillet
(86) Numéro de dépôt international: PCT/EP2014/075835
(87) Numéro de publication internationale: WO 2015/082309

(56) Documents cités:
- US-A1- 2005 186 906
- US-A1- 2009 290 561
- BEHCET SARIKAYA (HUAWEI): "Draft_Technical_Requirements ; 21-08-0008-01-mrpm-draft-technical-require ments", IEEE DRAFT; 21-08-0008-01-MRPM-DRAFT-TECHNICAL-REQUIRE MENTS, IEEE-SA MENTOR, PISCATAWAY, NJ USA, vol. 802.21, no. 1, 28 janvier 2008 (2008-01-28), pages 1-17, XP017659802,

## Description

La présente invention concerne un dispositif ayant une première interface radio permettant de mettre en oeuvre un premier réseau de communication sans-fil et une seconde interface radio permettant de mettre en oeuvre un second réseau de communication sans-fil, et concerne plus particulièrement un mécanisme permettant de préserver des ressources dans la mise en oeuvre de tels réseaux de communication sans-fil.

De nombreux équipements destinés à mettre en oeuvre des réseaux de communication sans-fil disposent d'une double interface radio, permettant notamment d'effectuer des communications sans-fil sur des bandes fréquentielles distinctes. Par exemple, une grande quantité des passerelles résidentielles offre aujourd'hui une double interface Wi-Fi (marque déposée) permettant d'établir des réseaux de communication sans-fil à la fois dans la bande fréquentielle à 2.4 GHz, tel que défini par les standards IEEE 802.11b/g/n, et dans la bande fréquentielle à 5GHz tel que défini par les standards IEEE 802.1 la/n/ac. Il est usuel d'utiliser la bande fréquentielle à 2.4GHz pour du trafic Internet et la bande fréquentielle à 5GHz pour du trafic premium, comme par exemple des données audiovisuelles.

La contrepartie de mettre à disposition une double interface radio est une consommation accrue d'énergie et plus généralement de ressources de traitement et/ou de ressources mémoire. Une telle consommation accrue est notamment due à un très faible rendement des amplificateurs de puissance, au fait de mettre en oeuvre de l'écoute multicanale et à la consommation générale des interfaces radio. On peut d'ailleurs noter que de telles interfaces radio sont souvent équipées d'un processeur complémentaire (« offloading processor » en anglais) destiné à soulager un processeur principal du dispositif pour ce qui concerne la gestion de ladite interface radio.

Une optimisation de consommation énergétique de telles interfaces radios est généralement réalisée par un repli des systèmes MIMO « Multiple Input Multiple Output » en anglais) NxN (N>1) en 1x1 ; cette technique est appelée « One Channel Listening » ou encore « Green Access Point ». Cette technique peut être complétée par une coupure cyclique de l'interface radio (appelée « doze mode » en anglais) dont le rapport cyclique On/Off permet une économie d'énergie supplémentaire tout en conservant une capacité d'écoute de dispositifs clients qui souhaiteraient se connecter à un réseau de communication géré par ledit dispositif.

De telles techniques ne permettent cependant pas de réaliser des économies énergétiques, et plus généralement de ressources de traitement et/ou de ressources mémoire, suffisantes. Il est souhaitable de pallier ces inconvénients de l'état de la technique. Il est notamment souhaitable de fournir une solution qui permette de réduire la consommation énergétique, et plus généralement la consommation de ressources de traitement et/ou de ressources mémoire, d'un dispositif destiné à mettre en oeuvre des réseaux de communication sans-fil et disposant pour ce faire d'une double interface radio.

Il est connu le document «IEEE 802.21, Multi-Radio PM Draft Technical Requirements », 21-08-0008-01-mrpm, Janvier 2008, XP017659802*,* qui décrit un système possédant une pluralité d'interfaces radio reposant sur des technologies distinctes (*e.g.* WiFi et WiMAX), et qui décrit des scénarii de dispositifs disposant d'une première interface radio et d'une seconde interface radio, dans lesquels la seconde interface radio est désactivée et la première interface radio est configurée pour être à l'écoute de messages (*e.g*. paging) qui concernent la seconde interface radio.

Il est aussi connu la demande de brevet US 2009/290561 A1, qui décrit un réseau de télécommunication dans lequel des stations de base désactivent leurs chaînes de transmission respectives lorsqu'elles ne reçoivent pas de signaux de la part de terminaux mobiles, et lorsque ces stations de base reçoivent des signaux d'au moins un terminal mobile, leurs chaînes de transmission respectives sont réactivées de manière à créer des cellules respectives, permettant ainsi d'effectuer des procédures de type « handover ».

Il est aussi connu la demande de brevet US 2005/186906 A1, qui décrit un terminal mobile disposant d'une interface Bluetooth et d'une interface WLAN (« Wireless Local Area Network » en anglais), et dans lequel l'interface Bluetooth est utilisée pour maintenir le contact avec une infrastructure réseau lorsque l'interface WLAN est placée en mode inactif.

L'invention concerne un procédé mis en oeuvre par un dispositif ayant une première interface radio permettant de mettre en oeuvre un premier réseau de communication sans-fil et une seconde interface radio permettant de mettre en oeuvre un second réseau de communication sans-fil, les premier et second réseaux de communication sans-fil ayant des identifiants distincts, la première interface radio est adaptée pour mettre en oeuvre des réseaux de communication sans-fil dans une première bande fréquentielle et la seconde interface radio est adaptée pour mettre en oeuvre des réseaux de communication sans-fil dans une seconde bande fréquentielle distincte de la première bande fréquentielle. Lorsqu'aucun dispositif client n'est connecté au second réseau de communication sans-fil, le dispositif met en oeuvre un mode économique en effectuant les étapes suivantes : désactiver la seconde interface radio ; mettre en oeuvre d'un troisième réseau de communication sans-fil via ladite première interface radio, le troisième réseau de communication sans-fil possédant le même identifiant que le second réseau de
communication sans-fil. Et, une fois qu'un dispositif client se connecte au troisième réseau de communication sans-fil, le dispositif effectue en outre les étapes suivantes : réactiver la seconde interface radio et remettre en oeuvre le second réseau de communication sans-fil ; et couper le troisième réseau de communication sans-fil et faire basculer ledit dispositif client vers le second réseau de communication sans-fil. Ainsi, en désactivant la seconde interface radio, des ressources (*e.g*. énergétiques) sont préservées. De plus, par la mise en oeuvre du troisième réseau de communication sans-fil, le dispositif reste à l'écoute de dispositifs clients qui souhaiteraient se connecter au second réseau de communication sans-fil qui a été coupé suite à la désactivation de la seconde interface radio.

Selon un mode de réalisation particulier, la première interface radio est adaptée pour mettre en oeuvre des réseaux de communication sans-fil dans une première bande fréquentielle et la seconde interface radio est adaptée pour mettre en oeuvre des réseaux de communication sans-fil dans une seconde bande fréquentielle distincte de la première bande fréquentielle.

Selon un mode de réalisation particulier, la première interface radio est conforme à la norme Wi-Fi dans la bande fréquentielle à 2.4 GHz et la seconde interface radio est conforme à la norme Wi-Fi dans la bande fréquentielle à 5 GHz.

Selon un mode de réalisation particulier, ledit dispositif augmente, le temps que ledit dispositif client bascule vers le second réseau de communication sans-fil, une quantité de ressources mémoire allouées au traitement des échanges avec le dispositif client.

Selon un mode de réalisation particulier, le dispositif ne met en oeuvre le mode économique qu'après avoir détecté qu'aucun dispositif client n'a été connecté au second réseau de communication sans-fil pendant un laps de temps de durée prédéfinie.

Selon un mode de réalisation particulier, ledit dispositif décide de mettre en oeuvre le mode économique en fonction de capacités de dispositifs clients amenés à se connecter audit dispositif via un dit réseau de communication sans-fil, lesdites capacités étant relatives à une compatibilité desdits dispositifs clients avec lesdites première et seconde interfaces radio.

Selon un mode de réalisation particulier, lorsqu'un nouveau dispositif client se connecte au premier réseau de communication sans-fil, ledit dispositif effectue les étapes suivantes : stocker une information indiquant que le nouveau dispositif client est compatible avec la première interface radio ; mettre en oeuvre un quatrième réseau de communication sans-fil via la seconde interface radio, le quatrième réseau de communication sans-fil ayant le même identifiant que le premier réseau de communication sans-fil ; couper le premier réseau de communication sans-fil et faire basculer ledit dispositif client vers le quatrième réseau de communication sans-fil ; et stocker une information indiquant que le nouveau dispositif client est compatible avec la seconde interface radio, lorsque ledit dispositif client bascule sur le quatrième réseau de communication sans-fil.

Selon un mode de réalisation particulier, ledit dispositif met en oeuvre le quatrième réseau de communication sans-fil lorsque uniquement un ou plusieurs nouveaux dispositifs clients sont connectés au premier réseau de communication sans-fil.

Selon un mode de réalisation particulier, lorsqu'un nouveau dispositif client se connecte au second réseau de communication sans-fil, ledit dispositif effectue les étapes suivantes : stocker une information indiquant que le nouveau dispositif client est compatible avec la seconde interface radio ; mettre en oeuvre le troisième réseau de communication sans-fil via la première interface radio ; couper le second réseau de communication sans-fil et faire basculer ledit dispositif client vers le troisième réseau de communication sans-fil ; et stocker une information indiquant que le nouveau dispositif client est compatible avec la première interface radio, lorsque ledit dispositif client bascule sur le troisième réseau de communication sans-fil.

Selon un mode de réalisation particulier, ledit dispositif met en oeuvre le troisième réseau de communication sans-fil pour faire basculer ledit nouveau dispositif client lorsque uniquement un ou plusieurs nouveaux dispositifs clients sont connectés au second réseau de communication sans-fil.

Selon un mode de réalisation particulier, pour faire basculer un dispositif client d'un réseau de communication sans-fil à un autre réseau de communication sans-fil, ledit dispositif envoie audit dispositif client un message invitant ledit dispositif client à se connecter au réseau de communication sans-fil identifié par un identifiant dudit autre réseau de communication sans-fil.

L'invention concerne également un dispositif ayant une première interface radio permettant de mettre en oeuvre un premier réseau de communication sans-fil et une seconde interface radio permettant de mettre en oeuvre un second réseau de communication sans-fil, les premier et second réseaux de communication sans-fil ayant des identifiants distincts, la première interface radio est adaptée pour mettre en oeuvre des réseaux de communication sans-fil dans une première bande fréquentielle et la seconde interface radio est adaptée pour mettre en oeuvre des réseaux de communication sans-fil dans une seconde bande fréquentielle distincte de la première bande fréquentielle. Lorsqu'aucun dispositif client n'est connecté au second réseau de communication sans-fil, le dispositif met en oeuvre les moyens suivants : des moyens pour désactiver la seconde interface radio ; des moyens pour mettre en oeuvre d'un troisième réseau de communication sans-fil via ladite première interface radio, le troisième réseau de communication sans-fil possédant le même identifiant que le second réseau de communication sans-fil. Et, une fois qu'un dispositif client se connecte au troisième réseau de communication sans-fil, le dispositif met en oeuvre les moyens suivants : des moyens pour réactiver la seconde interface radio et remettre en oeuvre le second réseau de communication sans-fil ; et des moyens pour couper le troisième réseau de communication sans-fil et faire basculer ledit dispositif client vers le second réseau de communication sans-fil.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication sans-fil dans lequel la présente invention peut être mise en oeuvre ;
- la Fig. 2 illustre schématiquement un exemple d'architecture matérielle d'un dispositif, du système de la Fig. 1, permettant une mise en oeuvre de réseaux de communication sans-fil ;
- la Fig. 3 illustre schématiquement un algorithme de configuration dudit dispositif dans le cadre d'un mode de fonctionnement appelé *mode ECO ;*
- la Fig. 4 illustre schématiquement un premier algorithme de détection de capacités de dispositifs clients ;
- la Fig. 5 illustre schématiquement un second algorithme de détection de capacités de dispositifs clients ; et
- la Fig. 6 illustre schématiquement un algorithme de décision d'activation ou pas du mode ECO, en fonction des capacités des dispositifs clients.

Afin de permettre de réduire la consommation énergétique, et plus généralement la consommation de ressources de traitement et/ou de ressources mémoire, d'un dispositif mettant en oeuvre un premier réseau de communication sans-fil via une première interface radio et un second réseau de communication sans-fil via une seconde interface radio, il est proposé que ledit dispositif désactive la seconde interface radio lorsqu'aucun dispositif client n'est connecté au second réseau de communication sans-fil et de créer via la première interface radio un autre réseau de communication ayant le même identifiant que celui précédemment utilisé par le second réseau de communication sans-fil. La première interface radio permet ainsi l'écoute de dispositifs clients qui souhaiteraient se connecter au second réseau de communication sans-fil, tout en réduisant la consommation relative à la seconde interface radio. Lorsqu'un dispositif client se connecte à cet autre réseau de communication, le dispositif réactive la seconde interface radio afin de permettre d'établir le second réseau de communication sans-fil et assure le basculement du dispositif client vers ledit second réseau de communication sans-fil. Une continuité de services mis en oeuvre via le second réseau de communication est ainsi assurée.

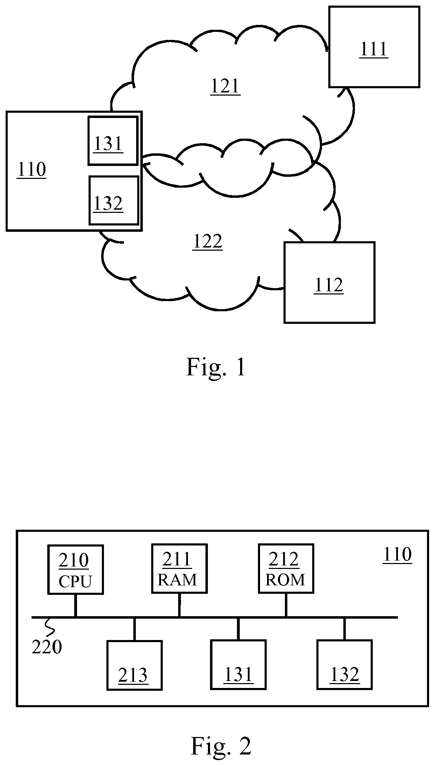

La Fig. 1 illustre schématiquement un système de communication dans lequel la présente invention peut être mise en oeuvre.

Le système de communication comporte un dispositif 110 adapté pour permettre la mise en oeuvre de réseaux de communication sans-fil. Le dispositif 110 est par exemple un point d'accès ou une passerelle résidentielle incluant les fonctionnalités d'un point d'accès.

Le dispositif 110 comporte une première interface radio 131 et une seconde interface radio 132. Le dispositif 110 est ainsi adapté pour pouvoir mettre en oeuvre au moins un réseau de communication sans-fil distinct via chacune des première 131 et seconde 132 interfaces radio. Chaque réseau de communication sans-fil mis en oeuvre par le dispositif 110 est identifié par un identifiant respectif.

Dans un mode de réalisation particulier, la première interface radio 131 permet de mettre en oeuvre des réseaux de communication sans-fil dans une première bande fréquentielle et la seconde interface radio 132 permet de mettre en oeuvre des réseaux de communication sans-fil dans une seconde bande fréquentielle distincte de la première bande fréquentielle.

Selon un mode de réalisation préférentiel, la première interface radio 131 est compatible avec la norme Wi-Fi (marque déposée) dans la bande fréquentielle à 2.4 GHz et la seconde interface radio 132 est compatible avec la norme Wi-Fi (marque déposée) dans la bande fréquentielle à 5 GHz. Chaque réseau de communication sans-fil mis en oeuvre via ces interfaces radio est alors associé à un identifiant SSID (« Service Set IDentifier » en anglais). Cet identifiant SSID est périodiquement émis par le dispositif 110 via l'interface radio concernée dans un signal de balise servant à indiquer que le dispositif 110 fournit les moyens de mise en oeuvre d'un réseau de communication sans-fil identifié par l'identifiant SSID.

Deux réseaux de communication sans-fil sont ainsi représentés sur la Fig. 1. Le dispositif 110 fournit les moyens de mise en oeuvre via la première interface radio 131 d'un premier réseau de communication sans-fil 121 sur lequel est connecté un premier dispositif client 111 compatible avec la première interface radio 131. On dit aussi que le dispositif client 111 est connecté au dispositif 110 via le premier réseau de communication sans-fil 121. Le dispositif 111 est qualifié de *client* en ce que ledit dispositif 111 bénéficie des services de mise en oeuvre de réseaux de communication sans-fil du dispositif 110. Le dispositif 110 fournit aussi les moyens de mise en oeuvre via la seconde interface radio 132 d'un second réseau de communication sans-fil 122 sur lequel est connecté un second dispositif client 112 compatible avec la seconde interface radio 132. On dit aussi que le dispositif client 112 est connecté au dispositif 110 via le second réseau de communication sans-fil 122. Le dispositif 112 est aussi qualifié de *client* en ce que ledit dispositif 112 bénéficie des services de mise en oeuvre de réseaux de communication sans-fil du dispositif 110. Un dispositif client est qualifié de compatible avec une interface radio lorsque ledit dispositif client met en oeuvre la même technologie radio que celle mise en oeuvre par le dispositif 110 via ladite interface radio, permettant ainsi audit dispositif client de communiquer avec le dispositif 110 via ladite technologie radio.

Chacune des interfaces radio peut comporter un processeur et/ou de la mémoire dédiés à la mise en oeuvre de transmissions via ladite interface radio.

Le dispositif 110 peut mettre en oeuvre un mode d'économie d'énergie et/ou de ressources, dit *mode ECO,* tel que décrit en détails ci-après. Lorsque le mode ECO est mis en oeuvre, la seconde interface radio est désactivée lorsqu'aucun dispositif client n'est connecté au second réseau de communication sans-fil, la première interface radio étant alors configurée pour être à l'écoute de dispositifs clients qui souhaiteraient se connecter au second réseau de communication sans-fil.

La Fig. 2 illustre schématiquement un exemple d'architecture matérielle du dispositif 110. Le dispositif 110 comporte alors, reliés par un bus de communication 220 : un processeur ou CPU (« Central Processing Unit » en anglais) 210 ; une mémoire vive RAM (« Random Access Memory» en anglais) 211 ; une mémoire morte ROM (« Read Only Memory » en anglais) 212 ; une unité de stockage ou un lecteur de support de stockage, tel qu'un lecteur de cartes SD (« Secure Digital » en anglais) 213 ou un disque dur HDD (« Hard Disk Drive » en anglais) ; la première interface radio 131 permettant de mettre en oeuvre au moins le premier réseau de communication sans-fil ; et la seconde interface radio 132 permettant de mettre en oeuvre au moins le second réseau de communication sans-fil.

Le processeur 210 est capable d'exécuter des instructions chargées dans la RAM 211 à partir de la ROM 212, d'une mémoire externe (non représentée), d'un support de stockage, ou d'un réseau de communication. Lorsque le dispositif 110 est mis sous tension, le processeur 210 est capable de lire de la RAM 211 des instructions et de les exécuter. Ces instructions forment un programme d'ordinateur causant la mise en oeuvre, par le processeur 210, de tout ou partie des algorithmes et étapes décrits ci-après.

Ainsi, tout ou partie des algorithmes et étapes décrits ci-après peut être implémenté sous forme logicielle par exécution d'un ensemble d'instructions par une machine programmable, tel qu'un DSP (« Digital Signal Processor » en anglais) ou un microcontrôleur.

Tout ou partie des algorithmes et étapes décrits ci-après peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

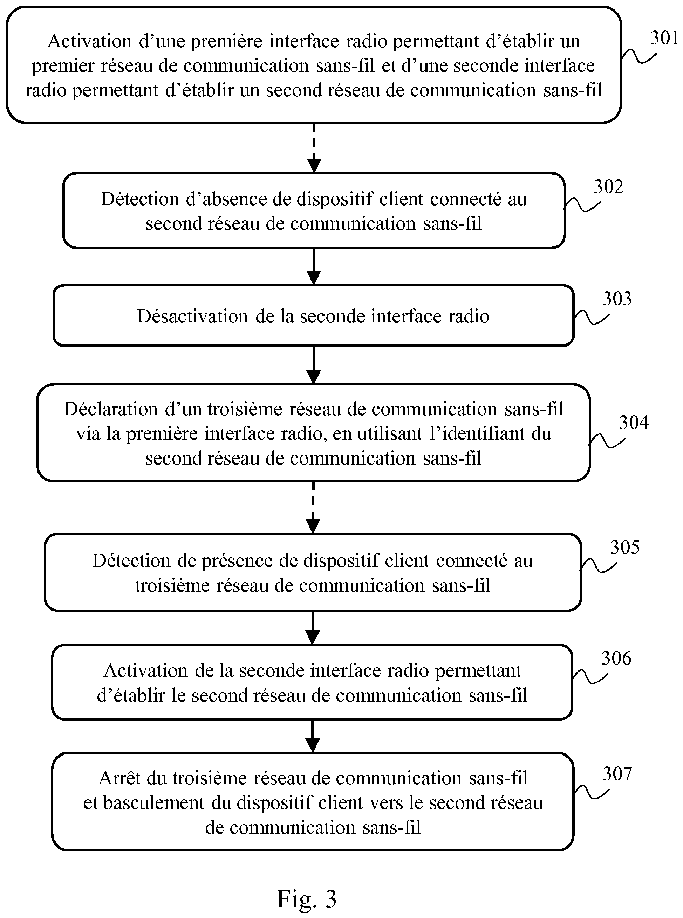

La Fig. 3 illustre schématiquement un algorithme de configuration du dispositif 110, afin de permettre d'en réduire la consommation énergétique et/ou de ressources, tout en assurant une continuité d'accès aux services des réseaux de communication sans-fil.

Dans une étape 301, le dispositif 110 active la première interface radio 131 permettant ainsi d'établir le premier réseau de communication sans-fil 121 et active la seconde interface radio 132 permettant ainsi d'établir le second réseau de communication sans-fil 122. Des dispositifs clients compatibles peuvent ainsi se connecter au réseau de communication sans-fil 121 ou au réseau de communication sans-fil 122. Chacun des premier 121 et second 122 réseaux de communication sans-fil est identifié par un identifiant distinct. Appelons SSID1 l'identifiant du premier réseau de communication sans-fil 121 et SSID2 l'identifiant du second réseau de communication sans-fil 122. Le dispositif 110 génère alors un premier signal de balise via la première interface radio 131, le premier signal de balise comportant l'identifiant SSID1. Le dispositif 110 génère aussi un second signal de balise via la seconde interface radio 132, le second signal de balise comportant l'identifiant SSID2. Des échanges peuvent alors s'opérer avec les dispositifs clients connectés à l'un ou à l'autre des réseaux de communication sans-fil, les dispositifs clients s'appuyant sur les premier et second signaux de balise émis par le dispositif 110 pour se synchroniser avec le dispositif 110.

Dans une étape 302 ultérieure, le dispositif 110 détecte qu'aucun dispositif client n'est connecté au second réseau de communication sans-fil 122. Dans un mode de réalisation particulier, le dispositif 110 détecte qu'aucun client n'est connecté au second réseau de communication sans-fil 122 depuis un laps de temps de durée prédéfinie.

Dans une étape 303 suivante, le dispositif 110 désactive la seconde interface radio 132. Le dispositif 110 n'émet alors plus de signal de balise pour maintenir le second réseau de communication sans-fil 122 et le second réseau de communication sans-fil 122 disparaît. La désactivation de la seconde interface radio 132 du dispositif 110 permet ainsi de préserver des ressources, que ce soit des ressources énergétiques ou que ce soit des ressources de traitement et/ou des ressources mémoire. En effet, désactiver la seconde interface radio 132 évite d'avoir à affecter des ressources de traitement et/ou des ressources mémoire à des activités relatives au maintien d'un réseau de communication sans-fil auquel aucun dispositif client n'est connecté.

Dans une étape 304 suivante, le dispositif 110 déclare un troisième réseau de communication sans-fil (non représenté sur la Fig. 1) via la première interface radio 131, en remplacement du second réseau de communication sans-fil 122 qui a disparu au cours de l'étape 303. Le dispositif 110 réutilise, pour ce troisième réseau de communication sans-fil, le même identifiant que celui précédemment utilisé pour identifier le second réseau de communication sans-fil 122 qui a disparu au cours de l'étape 303. Le dispositif 110 émet alors un troisième signal de balise via la première interface radio 131, le troisième signal de balise comportant l'identifiant SSID2. En d'autres termes, le dispositif 110 s'appuie sur la première interface radio 131 pour rester à l'écoute de dispositifs clients souhaitant se connecter au second réseau de communication sans-fil 122, et pour ainsi économiser des ressources relatives à la seconde interface radio 132 dudit dispositif 110. Des échanges peuvent alors continuer à s'opérer avec les dispositifs clients connectés au premier réseau de communication sans-fil 121, lesdits dispositifs clients s'appuyant sur le premier signal de balise émis par le dispositif 110 pour se synchroniser avec le dispositif 110.

Dans une étape 305 ultérieure, le dispositif 110 détecte qu'un dispositif client se connecte au troisième réseau de communication sans-fil. Considérons que le dispositif 110 détecte que le dispositif client 112 se connecte au troisième réseau de communication sans-fil.

Dans une étape 306 suivante, le dispositif 110 réactive la seconde interface radio 132, ce qui permet de remettre en place le second réseau de communication sans-fil 122. Le dispositif client 112 est alors toujours connecté au troisième réseau de communication sans-fil établi via la première interface radio 131.

Une fois la seconde interface radio 132 réactivée, dans une étape 307 suivante, le dispositif 110 arrête l'émission du troisième signal de balise, ce qui entraîne la disparition du troisième réseau de communication sans-fil. Le dispositif 110 réactive l'émission du second signal de balise via la seconde interface radio 132, le second signal de balise comportant l'identifiant SSID2, et le dispositif 110 fait basculer le dispositif client 112 du troisième réseau de communication sans-fil vers le second réseau de communication sans-fil 122.

Différents modes de réalisation peuvent être mis en oeuvre pour faire basculer le dispositif client 112 du troisième réseau de communication sans-fil vers le second réseau de communication sans-fil 122.

Selon un premier mode de réalisation, la disparition du troisième réseau de communication sans-fil et la remise en place du second réseau de communication sans-fil 122 impliquent que le dispositif client 112 va détecter le second signal de balise comportant l'identifiant SSID2. Cet identifiant SSID2 étant le même que celui du troisième réseau de communication sans-fil, le dispositif client 112 va alors se connecter au second réseau de communication sans-fil 122.

Selon un second mode de réalisation, le dispositif 110 envoie via la première interface radio 131, à travers le troisième réseau de communication, un message invitant le dispositif client à se connecter au réseau de communication sans-fil identifié par l'identifiant SSID2, arrête immédiatement après la mise en oeuvre du troisième réseau de communication sans-fil et réactive la mise en oeuvre du second réseau de communication sans-fil 122. Il faut entendre l'expression « immédiatement après » comme « dans un laps de temps suffisamment court pour que le dispositif client n'ait pas le temps de considérer que ledit dispositif client est déjà connecté au réseau de communication sans-fil identifié par l'identifiant SSID2. Par exemple, le dispositif 110 met en oeuvre le standard IEEE 802.11v et envoie au dispositif client 112 un message recommandant au dispositif client 112 de se connecter au réseau de communication dont l'identifiant est SSID2.

Selon un mode de réalisation particulier, une mise en oeuvre du standard IEEE 802.11r par le dispositif 110 et le dispositif client 112 permet une reconnexion rapide et sans heurt (« seamlessly » en anglais) au second réseau de communication sans-fil 122.

Selon un mode de réalisation particulier, le dispositif 110 augmente, le temps que le dispositif client 112 bascule vers le second réseau de communication sans-fil 122, une quantité de ressources mémoire allouées au traitement des échanges avec le dispositif client 112. Par exemple, le dispositif 110 effectue une allocation temporaire de plus grandes files d'attente pour absorber le temps de déconnexion et de reconnexion du dispositif client 112.

Le mécanisme décrit ci-dessus en relation avec la Fig. 3 suppose que les dispositifs clients amenés à se connecter au second réseau de communication sans-fil sont, en plus d'être compatibles avec la seconde interface radio 132, compatibles avec la première interface radio 131. Il se peut cependant que le dispositif 110 puisse être en présence de dispositifs clients seulement compatibles avec la seconde interface radio 132, et pas avec la première interface radio 131. Il serait alors avantageux d'autoriser l'arrêt de la seconde interface radio 132 uniquement lorsque les dispositifs clients amenés à se connecter au second réseau de communication sans-fil sont compatibles avec la première interface radio 131 et avec la seconde interface radio 132. En d'autres termes, il serait avantageux de permettre au dispositif 110 de mettre en oeuvre le mode ECO uniquement lorsque les dispositifs clients amenés à se connecter au second réseau de communication sans-fil sont compatibles avec la première interface radio 131 et avec la seconde interface radio 132.

Dans un premier mode de réalisation, le dispositif 110 est une passerelle résidentielle fournie par un opérateur fournisseur d'accès à l'Internet. L'opérateur fournisseur d'accès à l'Internet a alors mis en oeuvre une infrastructure permettant, via l'Internet, de configurer toute passerelle résidentielle que l'opérateur fournisseur d'accès à l'Internet a fournie. Le protocole TR-069, aussi appelé protocole CWMP (« Customer Premises Equipment Wide Area Network Management Protocol » en anglais), peut être utilisé à cet effet. Le dispositif 110 est alors adapté à recevoir une information de configuration en provenance de l'infrastructure dudit opérateur, l'information de configuration indiquant si le dispositif 110 est autorisé ou pas à mettre en oeuvre le mode ECO. Ledit opérateur pourrait interdire au dispositif 110 de mettre en oeuvre le mode ECO, lorsqu'un utilisateur de ladite passerelle résidentielle achète ou déclare avoir acheté un équipement, amené à se connecter à ladite passerelle résidentielle, compatible uniquement avec la seconde interface radio 132 et pas avec la première interface radio 131. De la même manière, ledit opérateur pourrait autoriser au dispositif 110 de mettre en oeuvre le mode ECO, lorsque l'utilisateur de ladite passerelle résidentielle n'achète ou déclare n'avoir acheté que des équipements, amenés à se connecter à ladite passerelle résidentielle, compatibles à la fois avec la seconde interface radio 132 et avec la première interface radio 131.

Dans un second mode de réalisation, le dispositif 110 est équipé d'un afficheur adapté pour afficher une interface graphique GUI (« Graphical User Interface » en anglais) permettant de configurer le dispositif 110 afin d'autoriser ou pas la mise en oeuvre du mode ECO. Un utilisateur averti pourrait alors configurer le dispositif 110 en fonction de la compatibilité ou non des dispositifs, que l'utilisateur a achetés et qui sont amenés à se connecter audit dispositif 110, avec la première interface radio 131 et avec la seconde interface radio 132.

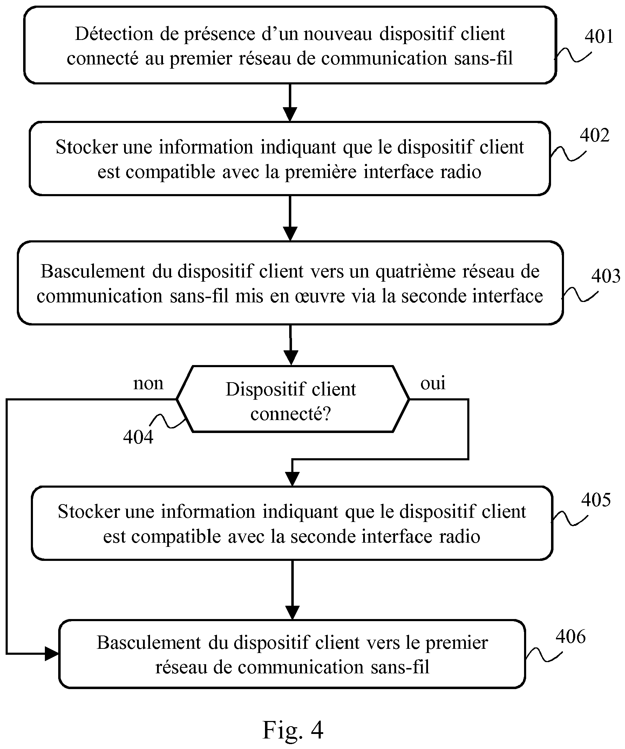

Dans un troisième mode de réalisation, le dispositif 110 est adapté pour déterminer dynamiquement si ledit dispositif 110 est autorisé à mettre en oeuvre le mode ECO. Cet aspect est détaillé par la suite en relation avec les Figs. 4 à 6.

La Fig. 4 illustre schématiquement un premier algorithme, mis en oeuvre par le dispositif 110, de détection de capacités de dispositifs clients. Ce premier algorithme vise à permettre au dispositif 110 de déterminer les capacités d'un dispositif client se connectant en premier lieu à un réseau de communication sans-fil établi via la première interface radio 131.

Dans une étape 401, le dispositif 110 détecte un nouveau dispositif client se connectant au premier réseau de communication 121, c'est-à-dire un dispositif client pour lequel le dispositif 110 ne savait jusqu'alors pas si ledit dispositif client est compatible avec la première interface radio 131.

Dans une étape 402 suivante, le dispositif 110 stocke dans une table de capacités une information indiquant que le dispositif client est compatible avec la première interface radio 131. Cette information est stockée par le dispositif 110 en association avec un identifiant du dispositif client. La table des capacités est une instance de stockage permettant de stocker des informations relatives aux capacités des dispositifs clients vis-à-vis des première 131 et seconde 132 interfaces radio et éventuellement des informations relatives aux capacités de basculement des dispositifs clients d'un réseau de communication sans-fil établi via la première interface radio et un autre réseau de communication sans-fil établi via la seconde interface radio.

Le dispositif 110 peut vérifier si la table des capacités indique que le dispositif client est compatible avec la seconde interface radio 132. Si tel est le cas, le dispositif 110 peut stopper l'exécution de l'algorithme de la Fig. 4. Le dispositif 110 peut aussi vouloir vérifier, même si ledit dispositif 110 sait d'ores et déjà que le dispositif client est compatible avec la seconde interface radio 132, si ledit dispositif client accepte de se faire basculer d'un réseau de communication sans-fil établi via la première interface radio 131 vers un autre réseau de communication sans-fil établi via la seconde interface radio 132. Dans ce cas, le dispositif 110 poursuit l'exécution de l'algorithme de la Fig. 4.

Dans une étape 403 suivante, le dispositif 110 met en oeuvre un quatrième réseau de communication sans-fil (non représenté sur la Fig. 1) via la seconde interface radio 132, en réutilisant l'identifiant du premier réseau de communication sans-fil 121, c'est-à-dire l'identifiant SSID1 dans l'exemple déjà mentionné. Le dispositif 110 arrête le premier réseau de communication sans-fil 121 et fait basculer le dispositif client vers le quatrième réseau de communication sans-fil. Le basculement s'opère comme déjà décrit en relation avec la Fig. 3. Il n'est pas nécessaire durant cette phase de désactiver la première interface radio 131 ; stopper l'émission du premier signal de balise suffit.

Dans une étape 404 suivante, le dispositif 110 vérifie si le dispositif client s'est connecté au quatrième réseau de communication sans-fil. Si tel est le cas, une étape 405 est effectuée ; sinon une étape 406 est effectuée.

Dans l'étape 405, le dispositif 110 stocke dans la table de capacités une information indiquant que le dispositif client est compatible avec la seconde interface radio 132. Cette information est stockée par le dispositif 110 en association avec l'identifiant du dispositif client. Ensuite, l'étape 406 est effectuée.

En effet, le dispositif 110 peut considérer être autorisé à mettre en oeuvre le mode ECO, lorsque le dispositif 110 a déterminé que tout dispositif client détecté est compatible à la fois avec ladite première interface radio 131 et avec ladite seconde interface radio 132. En variante de réalisation, le dispositif 110 peut considérer être autorisé à mettre en oeuvre le mode ECO, lorsque le dispositif 110 a déterminé que tout dispositif client détecté est apte à basculer d'un réseau de communication sans-fil établi via ladite première interface radio 131 vers un autre réseau de communication sans-fil établi via ladite seconde interface radio 132. Dans ce cas, dans l'étape 405, le dispositif 110 stocke dans la table de capacités une information indiquant que le dispositif client accepte de se faire basculer d'un réseau de communication sans-fil établi via la première interface radio 131 vers un autre réseau de communication sans-fil établi via la seconde interface radio 132. En d'autres termes, le dispositif 110 sait alors que, au besoin, ledit dispositif 110 peut ultérieurement mettre en oeuvre l'étape 307 vis-à-vis de ce dispositif client.

Dans l'étape 406, le dispositif 110 arrête le quatrième réseau de communication sans-fil, remet en oeuvre le premier réseau de communication sans-fil et fait rebasculer le dispositif client vers le premier réseau de communication sans-fil. Le basculement s'opère comme déjà décrit en relation avec la Fig. 3. Si le dispositif client n'avait pas pu basculer sur le quatrième réseau de communication sans-fil, ledit dispositif client doit se reconnecter au premier réseau de communication sans-fil, lorsque ledit premier réseau de communication sans-fil est remis en oeuvre par le dispositif 110. En effet, le dispositif client recevra alors le premier signal de balise, ce qui lui permet de se resynchroniser avec le dispositif 110.

Dans un mode de réalisation particulier, le dispositif 110 met en oeuvre les étapes 403 à 406 uniquement lorsque le ou les dispositif(s) client(s) concerné(s) sont seuls connectés au dispositif 110 via le premier réseau de communication sans-fil 121. Ainsi, le dispositif 110 évite de perturber d'autres dispositifs clients connectés au dispositif 110 via le premier réseau de communication sans-fil 121 et pour lesquels le dispositif 110 a déjà pu compléter la table de capacités.

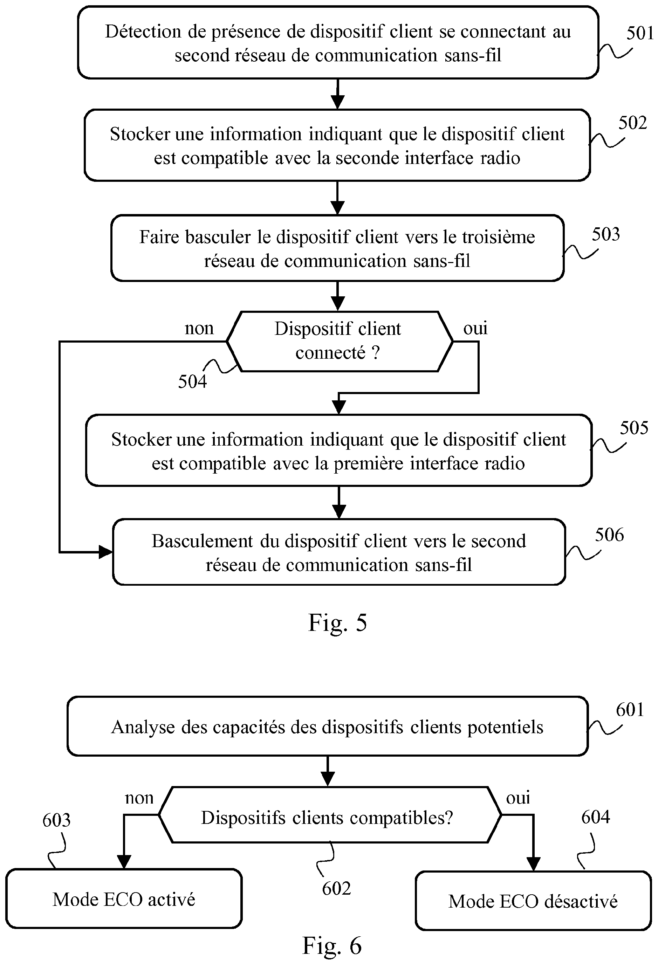

La Fig. 5 illustre schématiquement un second algorithme, mis en oeuvre par le dispositif 110, de détection de capacités de dispositifs clients. Ce second algorithme vise à permettre au dispositif 110 de déterminer les capacités d'un dispositif client se connectant en premier lieu à un réseau de communication sans-fil établi via la seconde interface radio 132.

Dans une étape 501, le dispositif 110 détecte un nouveau dispositif client se connectant au second réseau de communication 122, c'est-à-dire un dispositif client pour lequel le dispositif 110 ne savait jusqu'alors pas si ledit dispositif client est compatible avec la seconde interface radio 132.

Dans une étape 502 suivante, le dispositif 110 stocke dans la table de capacités une information indiquant que le dispositif client est compatible avec la seconde interface radio 132. Cette information est stockée par le dispositif 110 en association avec l'identifiant du dispositif client.

Le dispositif 110 peut vérifier si la table des capacités indique que le dispositif client est compatible avec la première interface radio 131. Si tel est le cas, le dispositif 110 peut stopper l'exécution de l'algorithme de la Fig. 5. Le dispositif 110 peut aussi vouloir vérifier, même si ledit dispositif 110 sait d'ores et déjà que le dispositif client est compatible avec la première interface radio 131, si ledit dispositif client accepte de se faire basculer d'un réseau de communication sans-fil établi via la première interface radio 131 vers un autre réseau de communication sans-fil établi via la seconde interface radio 132. Dans ce cas, le dispositif 110 poursuit l'exécution de l'algorithme de la Fig. 5.

Dans une étape 503 suivante, le dispositif 110 met en oeuvre le troisième réseau de communication sans-fil via la première interface radio 131, en réutilisant l'identifiant du second réseau de communication sans-fil, c'est-à-dire l'identifiant SSID2 dans l'exemple déjà mentionné. Le dispositif 110 arrête le second réseau de communication sans-fil et fait basculer le dispositif client vers le troisième réseau de communication sans-fil. Le basculement s'opère comme déjà décrit en relation avec la Fig. 3. Il n'est pas nécessaire durant cette phase de désactiver la seconde interface radio 132 ; stopper l'émission du second signal de balise suffit.

Dans une étape 504 suivante, le dispositif 110 vérifie si le dispositif client s'est connecté au troisième réseau de communication sans-fil. Si tel est le cas, une étape 505 est effectuée ; sinon une étape 506 est effectuée.

Dans l'étape 505, le dispositif 110 stocke dans la table de capacités une information indiquant que le dispositif client est compatible avec la première interface radio. Cette information est stockée par le dispositif 110 en association avec l'identifiant du dispositif client. Ensuite, l'étape 506 est effectuée.

Dans l'étape 506, le dispositif 110 arrête le troisième réseau de communication sans-fil, remet en oeuvre le second réseau de communication sans-fil 122 et fait rebasculer le dispositif client vers le second réseau de communication sans-fil 122. Le basculement s'opère comme déjà décrit en relation avec la Fig. 3. Si le dispositif client n'avait pas pu basculer sur le troisième réseau de communication sans-fil, ledit dispositif client doit se reconnecter au second réseau de communication sans-fil 122, lorsque ledit second réseau de communication sans-fil 122 est remis en oeuvre par le dispositif 110. En effet, le dispositif client reçoit alors le second signal de balise, ce qui lui permet de se resynchroniser avec le dispositif 110.

Comme déjà mentionné, le dispositif 110 peut considérer être autorisé à mettre en oeuvre le mode ECO lorsque le dispositif 110 a déterminé que tout dispositif client détecté est compatible à la fois avec ladite première interface radio 131 et avec ladite seconde interface radio 132. En variante de réalisation, le dispositif 110 peut considérer être autorisé à mettre en oeuvre le mode ECO lorsque le dispositif 110 a déterminé que tout dispositif client détecté est apte à basculer d'un réseau de communication sans-fil établi via la première interface radio 131 vers un autre réseau de communication sans-fil établi via la seconde interface radio 132. Dans ce cas, après mise en oeuvre des étapes 505 et 506, le dispositif 110 stocke dans la table de capacités une information indiquant que le dispositif client accepte de se faire basculer d'un réseau de communication sans-fil établi via la première interface radio 131 vers un autre réseau de communication sans-fil établi via la seconde interface radio 132. Dans une autre variante de réalisation, lorsque les comportements vis-à-vis du basculement sont supposés être symétriques du point de vue des dispositifs clients, le dispositif 110 peut considérer être autorisé à mettre en oeuvre le mode ECO lorsque le dispositif 110 a déterminé que tout dispositif client détecté est apte à basculer d'un réseau de communication sans-fil établi via la seconde interface radio 132 vers un autre réseau de communication sans-fil établi via la première interface radio 131. Dans ce cas, le dispositif 110 stocke à l'étape 505 l'information indiquant que le dispositif client accepte de se faire basculer d'un réseau de communication sans-fil établi via la première interface radio 131 vers un autre réseau de communication sans-fil établi via la seconde interface radio 132.

Les informations vis-à-vis des capacités des dispositifs clients qui ont été stockées pendant l'exécution des algorithmes des Figs. 4 et 5 sont préférentiellement associées à une temporisation de durée prédéfinie. La temporisation est réinitialisée quand le dispositif client concerné est détecté par le dispositif 110 comme connecté à un réseau de communication sans-fil établi par le dispositif 110 via la première interface radio 131 et/ou à un réseau de communication sans-fil établi par le dispositif 110 via la seconde interface radio 132. Lorsque le dispositif client n'est connecté à aucun tel réseau de communication sans-fil établi par le dispositif 110, la temporisation s'écoule. Lorsque la temporisation est écoulée, le dispositif client n'est plus considéré par le dispositif 110 comme étant amené à se connecter au dispositif 110 et les informations vis-à-vis des capacités dudit dispositif client qui ont été stockées pendant l'exécution des algorithmes des Figs. 4 et 5 sont alors effacées. Si ledit dispositif client est ultérieurement amené à se connecter au dispositif 110, alors ledit dispositif client est considéré comme un nouveau dispositif client par le dispositif 110.

Dans un mode de réalisation particulier, le dispositif 110 peut retenter ultérieurement de faire basculer d'un réseau de communication sans-fil établi via la première interface radio 131 vers un autre réseau de communication sans-fil établi via la seconde interface radio 132, ou vice-versa, un dispositif client précédemment identifié comment ne supportant pas un tel basculement.

Dans un mode de réalisation particulier, le dispositif 110 met en oeuvre les étapes 503 à 506 uniquement lorsque le ou les dispositif(s) client(s) concerné(s) sont seuls connectés au dispositif 110 via le second réseau de communication sans-fil 122. Ainsi, le dispositif 110 évite de perturber d'autres dispositifs clients connectés au dispositif 110 via le second réseau de communication sans-fil 122 et pour lesquels le dispositif 110 a déjà pu compléter la table de capacités.

La Fig. 6 illustre schématiquement un algorithme de décision de configuration du dispositif 110, en fonction des capacités des dispositifs clients.

Dans une étape 601, le dispositif 110 analyse les capacités des dispositifs clients amenés à se connecter au dispositif 110. Les capacités auxquelles il est fait référence ici sont celles déterminées par exécution des algorithmes des Figs. 4 et 5 et qui ont été stockées dans la table des capacités.

Dans une étape 602 suivante, le dispositif 110 détermine si tous les dispositifs clients amenés à se connecter au dispositif 110 sont compatibles avec la première interface radio 131 et avec la seconde interface radio 132. En variante, le dispositif 110 détermine si tous les dispositifs clients amenés à se connecter au dispositif 110 sont capables de se faire basculer depuis un réseau de communication sans-fil établi par le dispositif 110 via la première interface radio 131 vers un autre réseau de communication sans-fil établi par le dispositif 110 via la seconde interface radio 132. Lorsque tous les dispositifs clients amenés à se connecter au dispositif 110 sont compatibles avec la première interface radio 131 et avec la seconde interface radio 132, ou lorsque lesdits dispositifs clients sont capables de se faire basculer depuis un réseau de communication sans-fil établi par le dispositif 110 via la première interface radio 131 vers un autre réseau de communication sans-fil établi par le dispositif 110 via la seconde interface radio 132, une étape 603 est effectuée ; sinon, une étape 604 est effectuée.

Dans l'étape 603, le dispositif 110 active le mode ECO. Le dispositif 110 met alors en oeuvre l'algorithme de la Fig. 3. Il est alors mis fin à l'algorithme de la Fig. 6.

Dans l'étape 604, le dispositif 110 désactive le mode ECO. Le dispositif 110 décide alors de ne pas mettre en oeuvre l'algorithme de la Fig. 3.

L'algorithme de la Fig. 6 est préférentiellement mis en oeuvre à chaque fois que le contenu de la table de capacités est mis à jour.

L'exécution de l'algorithme de la Fig. 6 permet alors au dispositif 110 d'adapter dynamiquement son comportement vis-à-vis du mode ECO en fonction des divers dispositifs clients qui sont amenés à se connecter à un réseau de communication sans-fil établi par le dispositif 110 via la première interface radio 131 ou via la seconde interface radio 132.

## Revendications

1. Procédé mis en oeuvre par un dispositif (110) ayant une première interface radio (131) permettant de mettre en oeuvre un premier réseau de communication sans-fil (121) et une seconde interface radio (132) permettant de mettre en oeuvre un second réseau de communication sans-fil (122), les premier et second réseaux de communication sans-fil ayant des identifiants distincts, la première interface radio est adaptée pour mettre en oeuvre des réseaux de communication sans-fil dans une première bande fréquentielle et la seconde interface radio est adaptée pour mettre en oeuvre des réseaux de communication sans-fil dans une seconde bande fréquentielle distincte de la première bande fréquentielle, le procédé étant **caractérisé en ce que**, lorsqu'aucun dispositif client n'est connecté au second réseau de communication sans-fil, le dispositif met en oeuvre un mode économique en effectuant les étapes suivantes :
- désactiver (303) la seconde interface radio ;
- mettre en oeuvre (304) un troisième réseau de communication sans-fil via ladite première interface radio, le troisième réseau de communication sans-fil possédant le même identifiant que le second réseau de communication sans-fil ;
et, une fois qu'un dispositif client se connecte au troisième réseau de communication sans-fil :
- réactiver (306) la seconde interface radio et remettre en oeuvre le second réseau de communication sans-fil ; et
- couper (307) le troisième réseau de communication sans-fil et faire basculer ledit dispositif client vers le second réseau de communication sans-fil.

2. Procédé selon la revendication 1, **caractérisé en ce que** la première interface radio est conforme à la norme Wi-Fi dans la bande fréquentielle à 2.4 GHz et la seconde interface radio est conforme à la norme Wi-Fi dans la bande fréquentielle à 5 GHz.

3. Procédé selon l'une quelconque des revendications 1 et 2, **caractérisé en ce que** ledit dispositif augmente, le temps que ledit dispositif client bascule vers le second réseau de communication sans-fil, une quantité de ressources mémoire allouées au traitement des échanges avec le dispositif client.

4. Procédé selon l'une quelconque des revendications 1 à 3, **caractérisé en ce que** le dispositif ne met en oeuvre le mode économique qu'après avoir détecté qu'aucun dispositif client n'a été connecté au second réseau de communication sans-fil pendant un laps de temps de durée prédéfinie.

5. Procédé selon l'une quelconque des revendications 1 à 4, **caractérisé en ce que** ledit dispositif décide (603) de mettre en oeuvre le mode économique en fonction de capacités de dispositifs clients amenés à se connecter audit dispositif via un dit réseau de communication sans-fil, lesdites capacités étant relatives à une compatibilité desdits dispositifs clients avec lesdites première et seconde interfaces radio.

6. Procédé selon la revendication 5, **caractérisé en ce que**, lorsqu'un nouveau dispositif client se connecte au premier réseau de communication sans-fil, ledit dispositif effectue les étapes suivantes :
- stocker (402) une information indiquant que le nouveau dispositif client est compatible avec la première interface radio ;
- mettre en oeuvre (403) un quatrième réseau de communication sans-fil via la seconde interface radio, le quatrième réseau de communication sans-fil ayant le même identifiant que le premier réseau de communication sans-fil ;
- couper (403) le premier réseau de communication sans-fil et faire basculer ledit dispositif client vers le quatrième réseau de communication sans-fil ; et
- stocker (405) une information indiquant que le nouveau dispositif client est compatible avec la seconde interface radio, lorsque ledit dispositif client bascule sur le quatrième réseau de communication sans-fil.

7. Procédé selon la revendication 6, **caractérisé en ce que** ledit dispositif met en oeuvre le quatrième réseau de communication sans-fil pour faire basculer ledit nouveau dispositif client lorsque uniquement un ou plusieurs nouveaux dispositifs clients sont connectés au premier réseau de communication sans-fil.

8. Procédé selon l'une quelconque des revendications 5 à 7, **caractérisé en ce que**, lorsqu'un nouveau dispositif client se connecte au second réseau de communication sans-fil, ledit dispositif effectue les étapes suivantes :
- stocker (502) une information indiquant que le nouveau dispositif client est compatible avec la seconde interface radio ;
- mettre en oeuvre (503) le troisième réseau de communication sans-fil via la première interface radio ;
- couper (503) le second réseau de communication sans-fil et faire basculer ledit dispositif client vers le troisième réseau de communication sans-fil ; et
- stocker (505) une information indiquant que le nouveau dispositif client est compatible avec la première interface radio, lorsque ledit dispositif client bascule sur le troisième réseau de communication sans-fil.

9. Procédé selon la revendication 8, **caractérisé en ce que** ledit dispositif met en oeuvre le troisième réseau de communication sans-fil pour faire basculer ledit nouveau dispositif client lorsque uniquement un ou plusieurs nouveaux dispositifs clients sont connectés au second réseau de communication sans-fil.

10. Procédé selon l'une quelconque des revendications 1 à 9, **caractérisé en ce que**, pour faire basculer un dispositif client d'un réseau de communication sans-fil à un autre réseau de communication sans-fil, ledit dispositif envoie audit dispositif client un message invitant ledit dispositif client à se connecter au réseau de communication sans-fil identifié par un identifiant dudit autre réseau de communication sans-fil.

11. Dispositif (110) ayant une première interface radio (131) permettant de mettre en oeuvre un premier réseau de communication sans-fil (121) et une seconde interface radio (132) permettant de mettre en oeuvre un second réseau de communication sans-fil (122), les premier et second réseaux de communication sans-fil ayant des identifiants distincts, la première interface radio est adaptée pour mettre en oeuvre des réseaux de communication sans-fil dans une première bande fréquentielle et la seconde interface radio est adaptée pour mettre en oeuvre des réseaux de communication sans-fil dans une seconde bande fréquentielle distincte de la première bande fréquentielle, **caractérisé en ce que**, lorsqu'aucun dispositif client n'est connecté au second réseau de communication sans-fil, le dispositif met en oeuvre les moyens suivants :
- des moyens pour désactiver (303) la seconde interface radio ;
- des moyens pour mettre en oeuvre (304) un troisième réseau de communication sans-fil via ladite première interface radio, le troisième réseau de communication sans-fil possédant le même identifiant que le second réseau de communication sans-fil ;
et, une fois qu'un dispositif client se connecte au troisième réseau de communication sans-fil :
- des moyens pour réactiver (306) la seconde interface radio et remettre en oeuvre le second réseau de communication sans-fil ; et
- des moyens pour couper (307) le troisième réseau de communication sans-fil et faire basculer ledit dispositif client vers le second réseau de communication sans-fil.

12. Produit programme d'ordinateur, **caractérisé en ce qu'**il comporte des instructions causant l'implémentation par un dispositif (110) du procédé selon l'une quelconque des revendications 1 à 10 lorsque lesdites instructions sont exécutées par un processeur (210) dudit dispositif (110).

13. Support de stockage d'informations, **caractérisé en ce qu'**il stocke un programme d'ordinateur comportant des instructions causant l'implémentation par un dispositif (110) du procédé selon l'une quelconque des revendications 1 à 10 lorsque lesdites instructions sont lues et exécutées par un processeur (210) dudit dispositif (110).

## Patentansprüche

1. Verfahren, das von einer Vorrichtung (110) angewendet wird, die eine erste Funkschnittstelle (131), die es ermöglicht, ein erstes drahtloses Kommunikationsnetz (121) zu verwenden, und eine zweite Funkschnittstelle (132) hat, die es ermöglicht, ein zweites drahtloses Kommunikationsnetz (122) zu verwenden, wobei das erste und das zweite drahtlose Kommunikationsnetz unterschiedliche Kennungen haben, wobei die erste Funkschnittstelle geeignet ist, drahtlose Kommunikationsnetze in einem ersten Frequenzband zu verwenden, und die zweite Funkschnittstelle geeignet ist, drahtlose Kommunikationsnetze in einem zweiten Frequenzband anders als das erste Frequenzband zu verwenden, wobei das Verfahren **dadurch gekennzeichnet ist, dass**, wenn keine Client-Vorrichtung mit dem zweiten drahtlosen Kommunikationsnetz verbunden ist, die Vorrichtung einen Sparmodus anwendet, indem sie die folgenden Schritte ausführt:
- Deaktivieren (303) der zweiten Funkschnittstelle;
- Verwenden (304) eines dritten drahtlosen Kommunikationsnetzes über die erste Funkschnittstelle, wobei das dritte drahtlose Kommunikationsnetz die gleiche Kennung besitzt wie das zweite drahtlose Kommunikationsnetz;
und, wenn eine Client-Vorrichtung sich mit dem dritten drahtlosen Kommunikationsnetz verbindet:
- Reaktivieren (306) der zweiten Funkschnittstelle und erneutes Verwenden des zweiten drahtlosen Kommunikationsnetzes; und
- Abschalten (307) des dritten drahtlosen Kommunikationsnetzes und Umschalten der Client-Vorrichtung zum zweiten drahtlosen Kommunikationsnetz.

2. Verfahren nach Anspruch 1, **dadurch gekennzeichnet, dass** die erste Funkschnittstelle dem WLAN-Standard im Frequenzband bei 2,4 GHz entspricht, und die zweite Funkschnittstelle dem WLAN-Standard im Frequenzband bei 5GHz entspricht.

3. Verfahren nach einem der Ansprüche 1 und 2, **dadurch gekennzeichnet, dass** die Vorrichtung, während die Client-Vorrichtung zum zweiten drahtlosen Kommunikationsnetz umschaltet, eine Menge von Speicherressourcen erhöht, die der Verarbeitung der Austauschvorgänge mit der Client-Vorrichtung zugeteilt sind.

4. Verfahren nach einem der Ansprüche 1 bis 3, **dadurch gekennzeichnet, dass** die Vorrichtung den Sparmodus erst anwendet, wenn sie erfasst hat, dass keine Client-Vorrichtung während einer vordefinierten Zeitdauer mit dem zweiten drahtlosen Kommunikationsnetz verbunden wurde.

5. Verfahren nach einem der Ansprüche 1 bis 4, **dadurch gekennzeichnet, dass** die Vorrichtung abhängig von den Kapazitäten von Client-Vorrichtungen, die veranlasst werden, sich über ein drahtloses Kommunikationsnetz mit der Vorrichtung zu verbinden, entscheidet (603), den Sparmodus anzuwenden, wobei die Kapazitäten sich auf eine Kompatibilität der Client-Vorrichtungen mit den ersten und zweiten Funkschnittstellen beziehen.

6. Verfahren nach Anspruch 5, **dadurch gekennzeichnet, dass**, wenn eine neue Client-Vorrichtung sich mit dem ersten drahtlosen Kommunikationsnetz verbindet, die Vorrichtung die folgenden Schritte ausführt:
- Speichern (402) einer Information, die anzeigt, dass die neue Client-Vorrichtung mit der ersten Funkschnittstelle kompatibel ist;
- Verwenden (403) eines vierten drahtlosen Kommunikationsnetzes über die zweite Funkschnittstelle, wobei das vierte drahtlose Kommunikationsnetz die gleiche Kennung hat wie das erste drahtlose Kommunikationsnetz;
- Abschalten (403) des ersten drahtlosen Kommunikationsnetzes und Umschalten der Client-Vorrichtung zum vierten drahtlosen Kommunikationsnetz; und
- Speichern (405) einer Information, die anzeigt, dass die neue Client-Vorrichtung mit der zweiten Funkschnittstelle kompatibel ist, wenn die Client-Vorrichtung auf das vierte drahtlose Kommunikationsnetz umschaltet.

7. Verfahren nach Anspruch 6, **dadurch gekennzeichnet, dass** die Vorrichtung das vierte drahtlose Kommunikationsnetz verwendet, um die neue Client-Vorrichtung umzuschalten, wenn nur eine oder mehrere neue Client-Vorrichtungen mit dem ersten drahtlosen Kommunikationsnetz verbunden sind.

8. Verfahren nach einem der Ansprüche 5 bis 7, **dadurch gekennzeichnet, dass**, wenn eine neue Client-Vorrichtung sich mit dem zweiten drahtlosen Kommunikationsnetz verbindet, die Vorrichtung die folgenden Schritte ausführt:
- Speichern (502) einer Information, die anzeigt, dass die neue Client-Vorrichtung mit der zweiten Funkschnittstelle kompatibel ist;
- Verwenden (503) des dritten drahtlosen Kommunikationsnetzes über die erste Funkschnittstelle;
- Abschalten (503) des zweiten drahtlosen Kommunikationsnetzes und Umschalten der Client-Vorrichtung zum dritten drahtlosen Kommunikationsnetz; und
- Speichern (505) einer Information, die anzeigt, dass die neue Client-Vorrichtung mit der ersten Funkschnittstelle kompatibel ist, wenn die Client-Vorrichtung auf das dritte drahtlose Kommunikationsnetz umschaltet.

9. Verfahren nach Anspruch 8, **dadurch gekennzeichnet, dass** die Vorrichtung das dritte drahtlose Kommunikationsnetz verwendet, um die neue Client-Vorrichtung umzuschalten, wenn nur eine oder mehrere neue Client-Vorrichtungen mit dem zweiten drahtlosen Kommunikationsnetz verbunden sind.

10. Verfahren nach einem der Ansprüche 1 bis 9, **dadurch gekennzeichnet, dass** zum Umschalten einer Client-Vorrichtung von einem drahtlosen Kommunikationsnetz zu einem anderen drahtlosen Kommunikationsnetz die Vorrichtung an die Client-Vorrichtung eine Nachricht schickt, die die Client-Vorrichtung auffordert, sich mit dem drahtlosen Kommunikationsnetz zu verbinden, das durch eine Kennung des anderen drahtlosen Kommunikationsnetzes gekennzeichnet ist.

11. Vorrichtung (110), die eine erste Funkschnittstelle (131), die es erlaubt, ein erstes drahtloses Kommunikationsnetz (121) zu verwenden, und eine zweite Funkschnittstelle (132) hat, die es erlaubt, ein zweites drahtloses Kommunikationsnetz (122) zu verwenden, wobei die ersten und zweiten drahtlosen Kommunikationsnetze unterschiedliche Kennungen haben, wobei die erste Funkschnittstelle geeignet ist, drahtlose Kommunikationsnetze in einem ersten Frequenzband zu verwenden, und die zweite Funkschnittstelle geeignet ist, drahtlose Kommunikationsnetze in einem zweiten Frequenzband anders als das erste Frequenzband zu verwenden, **dadurch gekennzeichnet, dass**, wenn keine Client-Vorrichtung mit dem zweiten drahtlosen Kommunikationsnetz verbunden ist, die Vorrichtung die folgenden Einrichtungen verwendet:
- Einrichtungen zur Deaktivierung (303) der zweiten Funkschnittstelle;
- Einrichtungen zum Verwenden (304) eines dritten drahtlosen Kommunikationsnetzes über die erste Funkschnittstelle, wobei das dritte drahtlose Kommunikationsnetz die gleiche Kennung besitzt wie das zweite drahtlose Kommunikationsnetz;
und, wenn eine Client-Vorrichtung sich mit dem dritten drahtlosen Kommunikationsnetz verbindet:
- Einrichtungen zur Reaktivierung (306) der zweiten Funkschnittstelle und zum erneuten Verwenden des zweiten drahtlosen Kommunikationsnetzes; und
- Einrichtungen zum Abschalten (307) des dritten drahtlosen Kommunikationsnetzes und Umschalten der Client-Vorrichtung zum zweiten drahtlosen Kommunikationsnetz.

12. Computerprogrammprodukt, **dadurch gekennzeichnet, dass** es Anweisungen aufweist, die die Implementierung des Verfahrens nach einem der Ansprüche 1 bis 10 durch eine Vorrichtung (110) verursachen, wenn die Anweisungen von einem Prozessor (210) der Vorrichtung (110) ausgeführt werden.

13. Informationsspeicherträger, **dadurch gekennzeichnet, dass** er ein Computerprogramm speichert, das Anweisungen aufweist, die die Implementierung des Verfahrens nach einem der Ansprüche 1 bis 10 durch eine Vorrichtung (110) verursachen, wenn die Anweisungen von einem Prozessor (210) (210) der Vorrichtung (110) gelesen und ausgeführt werden.

## Claims

1. Method implemented by a device (110) having a first radio interface (131) for implementing a first wireless communication network (121) and a second radio interface (132) for implementing a second wireless communication network (122), the first and second wireless communication networks having distinct identifiers, the first radio interface is suitable for implementing wireless communication networks in a first frequency band and the second radio interface is suitable for implementing wireless communication networks in a second frequency band distinct from the first frequency band, the method being **characterized in that**, when no client device is connected to the second wireless communication network, the device implements an economy mode by performing the following steps:
- deactivating (303) the second radio interface;
- implementing (304) a third wireless communication network via said first radio interface, the third wireless communication network possessing the same identifier as the second wireless communication network;
and, once a client device is connected to the third wireless communication network:
- reactivating (306) the second radio interface and re-implementing the second wireless communication network; and
- cutting off (307) the third wireless network and switching said client device to the second wireless communication network.

2. Method according to Claim 1, **characterized in that** the first radio interface is compliant with the Wi-Fi standard in the 2.4 GHz frequency band and the second radio interface is compliant with the Wi-Fi standard in the 5 GHz frequency band.

3. Method according to any one of Claims 1 and 2, **characterized in that** said device increases, at the time that said client device switches to the second wireless communication network, a quantity of memory resources allocated to the processing of the exchanges with the client device.

4. Method according to any one of Claims 1 to 3, **characterized in that** the device only implements the economy mode after having detected that no client device has been connected to the second wireless communication network during a period of time of predefined duration.

5. Method according to any one of Claims 1 to 4, **characterized in that** said device decides (603) to implement the economy mode according to capabilities of client devices caused to be connected to said device via a said wireless communication network, said capabilities being related to a compatibility of said client devices with said first and second radio interfaces.

6. Method according to Claim 5, **characterized in that**, when a new client device is connected to the first wireless communication network, said device performs the following steps:
- storing (402) a piece of information indicating that the new client device is compatible with the first radio interface;
- implementing (403) a fourth wireless communication network via the second radio interface, the fourth wireless communication network having the same identifier as the first wireless communication network;
- cutting off (403) the first wireless communication network and switching said client device to the fourth wireless communication network; and
- storing (405) a piece of information indicating that the new client device is compatible with the second radio interface, when said client device switches onto the fourth wireless communication network.

7. Method according to Claim 6, **characterized in that** said device implements the fourth wireless communication network for switching said new client device when only one or more new client devices are connected to the first wireless communication network.

8. Method according to any one of Claims 5 to 7, **characterized in that**, when a new client device is connected to the second wireless communication network, said device performs the following steps:
- storing (502) a piece of information indicating that the new client device is compatible with the second radio interface;
- implementing (503) the third wireless communication network via the first interface radio;
- cutting off (503) the second wireless communication network and switching said client device to the third wireless communication network; and
- storing (505) a piece of information indicating that the new client device is compatible with the first radio interface, when said client device switches onto the third wireless communication network.

9. Method according to Claim 8, **characterized in that** said device implements the third wireless communication network for switching said new client device when only one or more new client devices are connected to the second wireless communication network.

10. Method according to any one of Claims 1 to 9, **characterized in that**, for switching a client device from one wireless communication network to another wireless communication network, said device sends a message to said client device inviting said client device to connect to the wireless communication network identified by an identifier of said other wireless communication network.

11. Device (110) having a first radio interface (131) for implementing a first wireless communication network (121) and a second radio interface (132) for implementing a second wireless communication network (122), the first and second wireless communication networks having distinct identifiers, the first radio interface is suitable for implementing wireless communication networks in a first frequency band and the second radio interface is suitable for implementing wireless communication networks in a second frequency band distinct from the first frequency band, **characterized in that**, when no client device is connected to the second wireless communication network, the device implements the following means:
- means for deactivating (303) the second radio interface;
- means for implementing (304) a third wireless communication network via said first radio interface, the third wireless communication network possessing the same identifier as the second wireless communication network;
and, once a client device is connected to the third wireless communication network:
- means for reactivating (306) the second radio interface and re-implementing the second wireless communication network; and
- means for cutting off (307) the third wireless network and switching said client device to the second wireless communication network.

12. Computer program product, **characterized in that** it comprises instructions causing the implementation by a device (110) of the method according to any one of Claims 1 to 10 when said instructions are executed by a processor (210) of said device (110).

13. Information storage medium, **characterized in that** it stores a computer program comprising instructions causing the implementation by a device (110) of the method according to any one of Claims 1 to 10 when said instructions are read and executed by a processor (210) of said device (110).
